# EUROPEAN PATENT SPECIFICATION

(11) **EP 3 233 533 B1**
(45) Date of publication and mention of the grant of the patent: **06.02.2019**
(21) Application number: 15813670.5
(22) Date of filing: 09.12.2015
(51) Int. Cl.: B60C 11/03

(54) **TRUCK TIRE TREAD AND TRUCK TIRE**
LASTWAGENREIFENLAUFFLÄCHE UND LASTWAGENREIFEN
BANDE DE ROULEMENT DE PNEU DE CAMION ET PNEU DE CAMION

(30) Priority: 18.12.2014 US 201462093532 P
(43) Date of publication of application: 25.10.2017
(73) Proprietor: Compagnie Générale des Etablissements Michelin, 63000 Clermont-Ferrand (FR)
(72) Inventor: VOSS, Stefan, Greenville, SC 29605 (US)
(74) Representative: Casalonga
(86) International application number: PCT/US2015/064673
(87) International publication number: WO 2016/100032

(56) References cited:
- WO-A1-2011/135000
- FR-A1- 2 530 194
- FR-A1- 2 548 097

## Description

### BACKGROUND OF THE INVENTION

### Field of the Invention

This invention relates generally to a tire tread. More specifically, this invention relates to tire treads for long haul heavy trucks, in particular tires for free-rolling wheels thereof (so called steer positions and trailer positions), especially tires for trailers or semi-trailers.

### Description of the Related Art

Tire treads generally extend about the outer circumference of a tire to operate as the intermediary between the tire and a surface upon which it travels (the operating surface). Contact between the tire tread and the operating surface occurs along a footprint of the tire. Tire treads provide grip to resist tire slip that may result during tire acceleration, braking, and/or cornering. Tire treads may also include tread elements, such as ribs or lugs, and tread features, such as grooves and sipes, each of which may assist in providing target tire performance when a tire is operating under particular conditions.

One common problem faced by tire manufacturers is how to extend the wear life of a tire tread.

One solution is to increase the tread thickness; however, increasing the tread thickness (i.e., depth) generally increases heat generation and rolling resistance. Increasing tread thickness also decreases tread stiffness which in turn increases initial wear rate. Increasing tread thickness is therefore not an efficient solution for improving wear life and therefore not the way to go.

Another solution is to increase the ratio of the tread surface being in contact with the operating surface. This ratio is known as the Contact Surface Ratio (CSR). Increasing the CSR is known to be beneficial for wear life and can be beneficial for rolling resistance too. However, increasing the CSR is also known for harming the wet braking adherence performance of the tread. Wet braking adherence performance being a very important element, this trade-off may not be acceptable. The document FR-A-2 548 097 discloses a tire with improved wet performance.

Therefore, to improve wear rate it may be desirous to propose a novel way to increase CSR that would not result in a loss of wet braking adherence performance.

### SUMMARY OF THE INVENTION

The invention provides for a heavy truck tire tread having a longitudinal direction, a transverse direction and a thickness direction, said tread having a ground-engaging surface and comprising a series of similar tread features repeated along its longitudinal direction, each said tread feature of said series comprising:
- two ducts extending from the ground-engaging surface in the thickness direction, said ducts being apart one from the other and having a duct section area of at least 10 mm² and a length comprised between 50% and 100% of a thickness of said tread;
- one void being in fluidic connection with said two ducts, said void extending substantially parallel to the ground-engaging surface of the tread and at a distance therefrom and having a void section area of at least 10 mm²; and
- one sipe joining said two ducts and said void;
characterised in that said tread feature is otherwise blind and said series comprises at least 50 of said similar tread features.

In a preferred embodiment, said series comprises at least 100 of said similar tread features.

The foregoing and other objects, features and advantages of the invention will be apparent from the following more detailed descriptions of particular embodiments of the invention, as illustrated in the accompanying drawing wherein like reference numbers represent like parts of the invention.

### BRIEF DESCRIPTION OF THE DRAWINGS

FIG. **1** is a top view of a portion of a truck tire tread in accordance with the known prior art.
FIG. **2** is a perspective view of a full tread attached to a truck tire in accordance with the known prior art.
FIG. **3** is a top perspective view of a portion of a truck tire tread in accordance with a first embodiment of the invention.
FIG. **4** is a perspective view showing an inventive detail of the truck tire tread in accordance with a first embodiment of the invention.
FIG. 5 is a perspective transparent view showing the tread detail shown in FIG. 4 where normally-hidden under-surface features are made fully visible.
FIG. 6 is a top perspective view similar to FIG. 3 showing a portion of a truck tire tread in accordance with a second embodiment of the invention.
FIG. 7 is a perspective view of a mold element being used during a tire molding process to form a tire tread according to a third embodiment of the invention.
FIG. 8 is a perspective view of a full tread attached to a truck tire according to the first embodiment of the invention.

### DETAILED DESCRIPTION OF PARTICULAR EMBODIMENTS

Embodiments of the invention comprise a tire tread, and a tire including the tire tread, where the tire tread has a series of similar specific tread features repeated along its longitudinal direction. Specific embodiments, exemplary of the invention, are further described in association with the figures included herewith. It is appreciated that the inventive tire tread may comprise any tire tread for use in forming a tire. For example, the tire tread may be an original tread formed with a new tire, or may be applied to a used tire during retreading operations.

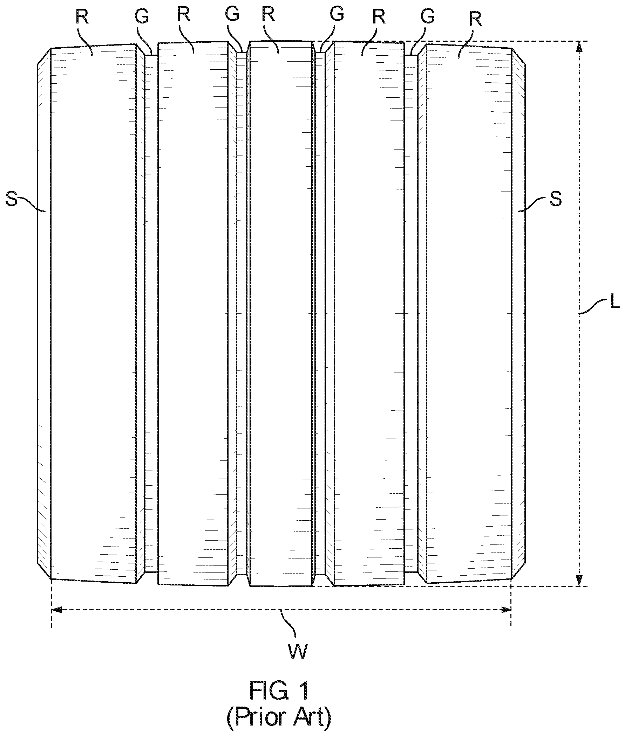

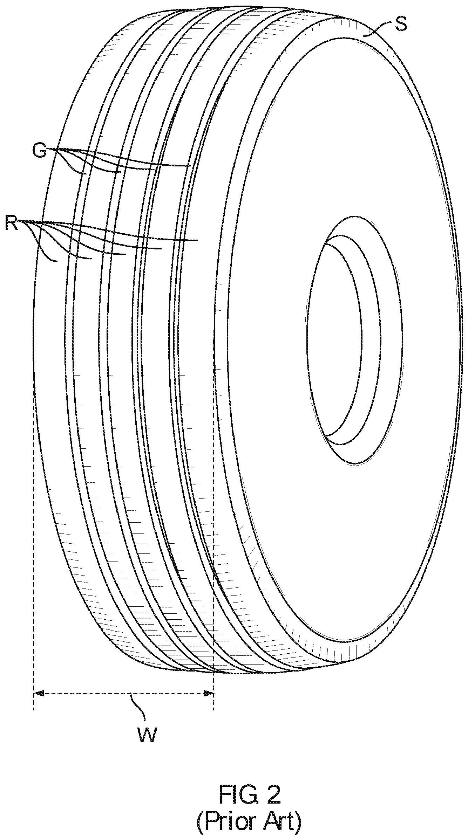

FIGS. **1-2** show a heavy truck tire tread of the known prior art. Such a tread includes a length configured to extend annularly around a tire and a width extending in a direction transverse to the length. The tread length extends in a direction which is also referred to as a lengthwise or longitudinal direction **L** of the tread. The tread width extends in a transverse direction **W** which is perpendicular to the longitudinal direction **L** of the tread. The transverse direction of the tread is also referred to as a lateral or widthwise direction of the tread. The tire tread also includes a pair of opposing lateral sides **S** spaced apart in the transverse direction to define the tread width. The pair of opposing lateral sides can be described as comprising a first lateral side and a second lateral side. The tire tread also includes an outer, ground-engaging side extending between the pair of opposing lateral sides.

As shown also in FIGS. **1-2**, a heavy truck tire tread according to the known prior art includes longitudinal grooves **G** intended to allow water to escape from the contact patch when the tire is rolling on a wet road surface. A groove is the space formed in a tread between walls of material over a depth at most equal to the thickness of the tread, these walls of material not coming into contact with one another in the usual running conditions of the tire. Longitudinal grooves are typically between 5 and 15 mm in width. Adjacent each longitudinal groove are ribs **R** that constitute together the ground-engaging surface of the tread. In free-rolling tire treads (so called steer and trailer wheel positions), especially for long haul trucks, ribs are essentially continuous along the tire circumference. Additional molded features like sipes (not shown on the drawings) may also be present in some or in all of the ribs and appear at the ground-engaging surface of the tread. A sipe is the space formed in a tread between walls of material over a depth at most equal to the thickness of the tread, the said walls being able, at least in part, to come into contact with one another in the usual running conditions of the tire. Sipes are generally made as thin as manufacturing would reasonably allow, being most of the time under 1 mm and preferably under 0.5 mm.

In free-rolling tire treads, the exact Contact Surface Ratio (CSR) is mostly depending upon the number and the width of the longitudinal grooves. Free-rolling tire treads have at least three such grooves with most of those treads having a number of four grooves. CSR values typically range from 0.7 to 0.8 in this tire segment. An example of such a tire is the commercially available Michelin XZA3 275/80 R22.5. This tire has 4 grooves and it has a CSR of 0.78.

The tread also includes a thickness extending from the outer, ground-engaging side to a bottom side of the tread. The thickness extends in a direction perpendicular to the ground-engaging surface. The tread bottom side is configured to engage a tire when the tread is attached to the tire. Most commonly, the bottom side is bonded to the tire, but there are other ways to attach a tread to a tire that may be employed to attach the inventive tread to a tire.

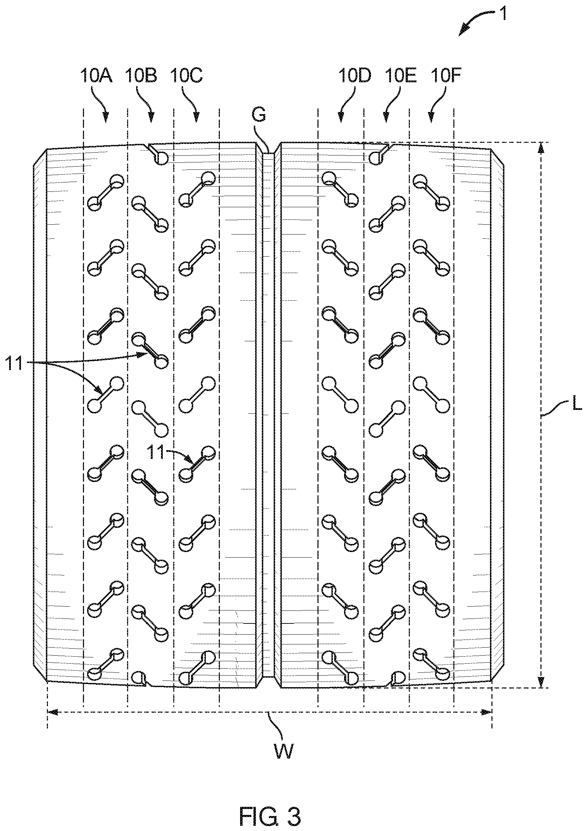

As shown in FIG. **3**, a first embodiment of the inventive tread **1** comprises several series of similar tread features **11.** In each series, those tread features are repeated along the longitudinal direction of the tread. In the shown embodiment, there are six series (**10A, 10B, 10C, 10D, 10E, 10F**) arranged parallel to one another across the width of the tread. In turn, this tread comprise only one longitudinal groove **G** compared to the four grooves present in the prior art tread of FIG. **1****.**

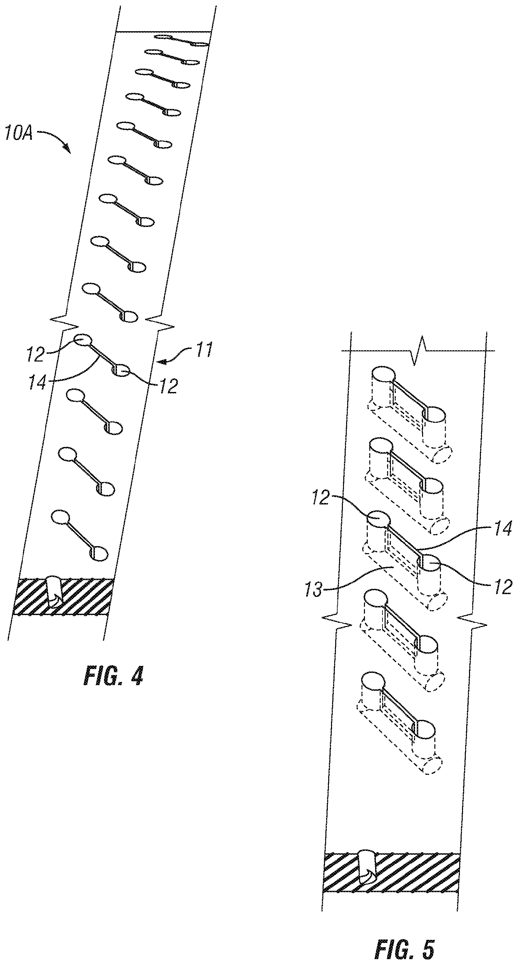

FIG. **4-5** show in more detail the tread features of one of the series. Each of said tread features comprise two ducts **12** extending from the ground-engaging surface in the thickness direction. Each of said tread features also comprises a common void **13** (only visible on the transparent view of FIG. **5**) running under the ground-engaging surface of the tread. The two ducts are connected to respective ends of said void. Each of said tread features further comprises a sipe **14.** The sipe joins the ground-engaging surface of the tread with said void and said two ducts.

As shown in FIG. **3-5****,** the two ducts of each feature are preferably offset in the longitudinal and transverse directions of the tread. Preferably the distance between the two ducts is at least equal to 4 mm.

As clearly visible form FIG. **3****,** each feature in each series is blind, that is to say the individual tread features are not in fluidic connection with the center groove **G** or the tread sides **S** and also not in fluidic connection with another tread feature be it from the same series or from a neighboring series.

The CSR of such a tread is therefore greatly increased. For example, the tread as shown on FIG. **3** has a CSR of 0.89. Despite this high CSR value, the wet braking adherence performance is maintained at a level similar to that of the prior art tread.

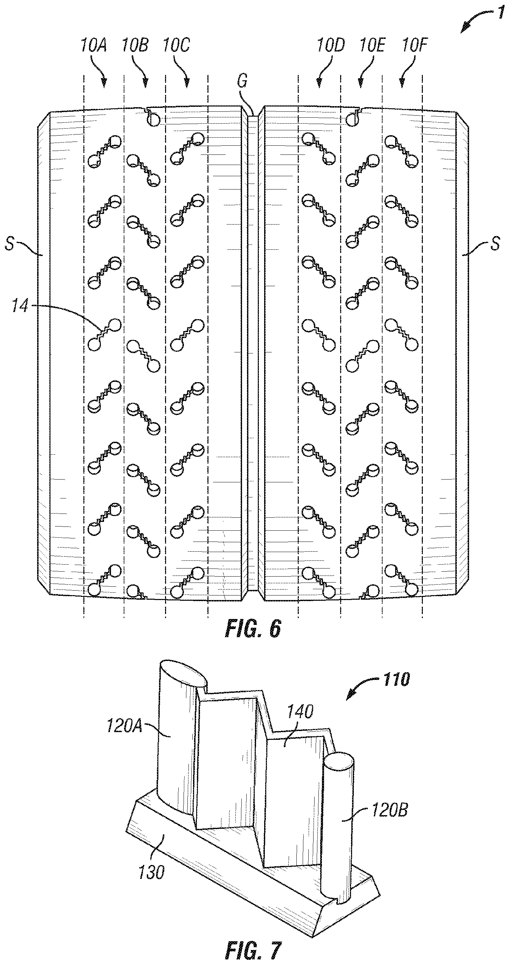

In a second embodiment of the invention shown on FIG. **6****,** the sipes may have an undulated shape. Undulated sipes are known to promote tread stiffness due to the sipe walls interlocking. Undulations may have many different shapes and can typically be one-directional (so called zigzag sipes) or bi-directional (so called egg-crate sipes).

FIG. **7** shows a molding element that can be used in a mold used for molding a third embodiment of the inventive tread. Because it shows the negative form or the specific tread feature of the invention, it may help better understanding its spirit. The molding element **110** comprises two pins **120a** and **120B,** intended to form the ducts **12.** A lug **130** joining the two pins is intended to form the connecting void **13.** A one-direction undulated (zigzag) blade **140** joins the lug and the pins and will form the sipe **14** in the tread. Such a molding element **110** will be repeated many times in the mold. Those repetitions need to be aligned together along the longitudinal direction of the tread to form one series of tread features characteristic of the invention and more preferably form several of those series across the tread.

FIG. **7** also serves to show that the void and ducts may have many different shapes as long as they can provide a sufficient fluid passage from one duct to the other duct of each such tread feature. Their sections may also vary along their length, provided their section area remain at least equal to 10 mm² and preferably between 12.6 mm² and 78.6 mm² which correspond to a diameter of between 4 mm and 10 mm in the case of sections of circular shape.

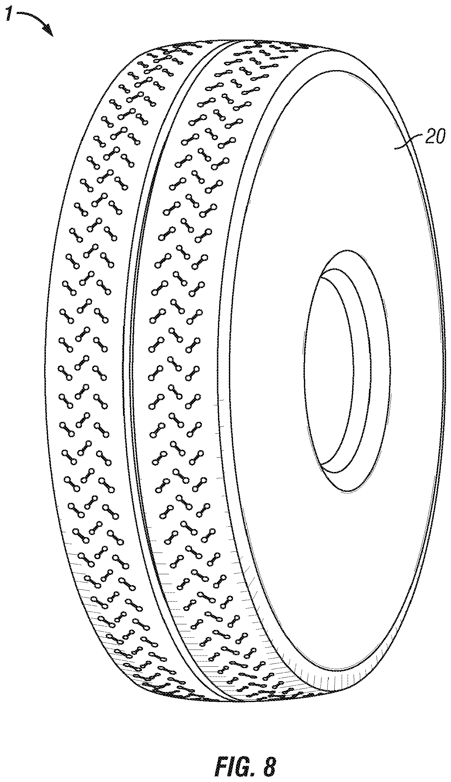

In an exemplary embodiment of the inventive tire tread shown in FIGS. **8****,** a tread **1** is shown attached to a tire **20.** It is appreciated that the tire may comprise any known tire, which may comprise any pneumatic or non-pneumatic tire. Additionally, for any such tire, the tread may be attached using any known manner. For example, in particular instances, the tire tread may be: (1) bonded to the tire by vulcanization; (2) attached using an adhesive; and/or, (3) even using mechanical means. It is appreciated that in different instances, the tire tread is either an original tread attached to a new tire or a replacement tread for use in forming a retreaded tire. The tread shown here is similar to the tread of FIG. **3** having one longitudinal groove **G** in the center and three series of tread features on each side of the center groove.

Many other combinations of numbers of series of such tread features and numbers or sizes of grooves can be contemplated once it is understood that the invention allows for higher CSR values with no wet adherence performance loss.

While this invention has been described with reference to particular embodiments thereof, it shall be understood that such description is by way of illustration and not by way of limitation. Accordingly, the scope and content of the invention are to be defined only by the terms of the appended claims.

## Claims

1. A heavy truck tire tread (1) having a longitudinal direction (L), a transverse direction (W) and a thickness direction, said tread having a ground-engaging surface and comprising a series of similar tread features (11) repeated along its longitudinal direction, each said tread feature of said series comprising:
- two ducts (12) extending from the ground-engaging surface in the thickness direction, said ducts being apart one from the other and having a duct section area of at least 10 mm² and a length comprised between 50% and 100% of a thickness of said tread;
- one void (13) being in fluidic connection with said two ducts, said void extending substantially parallel to the ground-engaging surface of the tread and at a distance therefrom and having a void section area of at least 10 mm²; and
- one sipe (14) joining said two ducts and said void;
**characterised in that** said tread feature is otherwise blind and said series comprises at least 50 of said similar tread features.

2. The heavy truck tire tread (1) of claim 1 wherein the two ducts (12) of said tread feature are apart by a distance at least equal to 4 mm.

3. The heavy truck tire tread (1) of any of the preceding claims wherein the two ducts (12) have a duct section area at least equal to 12.6 mm² and at most equal to 78.6 mm².

4. The heavy truck tire tread (1) of any of the preceding claims wherein the void (13) has a void section area at least equal to 12.6 mm² and at most equal to 78.6 mm².

5. The heavy truck tire tread (1) of any of the preceding claims wherein the tread features (11) of said series are such that the two ducts (12) of each feature are offset in the longitudinal direction (L) of the tread.

6. The heavy truck tire tread (1) of claim 5 wherein the tread features (11) of said series are such that the two ducts (12) of each feature are offset in the transverse direction (W) of the tread.

7. The heavy truck tire tread (1) of any of the preceding claims wherein the tread features (11) of said series are such that the sipe (14) of each feature is undulated.

8. The heavy truck tire tread (1) of any of the preceding claims comprising a plurality of said series of said tread features across the width direction of the tread, said series being arranged parallel one to the other.

9. The heavy truck tire tread (1) of claim 8 comprising at least four series of said tread features arranged parallel one to the other.

10. The heavy truck tire tread (1) of claim 8 comprising at least six series of said tread features arranged parallel one to the other.

11. The heavy truck tire tread (1) of any of the preceding claims comprising less than three longitudinal open grooves.

12. The heavy truck tire tread of claim 11 comprising less than two longitudinal open grooves

13. The heavy truck tire tread (1) of claim 11 not comprising any longitudinal open groove.

14. A heavy truck tire tread (1) of any of the preceding claims being operably attached to a heavy truck tire.

15. A heavy truck tire (20) comprising a heavy truck tire tread of any of the preceding claims.

## Patentansprüche

1. Schwerlastwagenreifenlauffläche (1) mit einer Längsrichtung (L), einer Querrichtung (W) und einer Dickenrichtung, wobei die Lauffläche eine bodenberührende Fläche besitzt und eine Reihe von ähnlichen Laufflächenmerkmalen (11) umfasst, die sich entlang ihrer Längsrichtung wiederholen, wobei jedes Laufflächenmerkmal der Reihe Folgendes umfasst:
- zwei Kanäle (12), die sich von der bodenberührenden Fläche in der Dickenrichtung erstrecken, wobei die Kanäle voneinander beabstandet sind und eine Kanalquerschnittsfläche von mindestens 10 mm² und eine Länge im Bereich zwischen 50% und 100% einer Dicke der Lauffläche besitzen;
- eine Vertiefung (13), die mit den zwei Kanälen in Fluidverbindung steht, wobei sich die Vertiefung im Wesentlichen parallel zu der bodenberührenden Fläche der Lauffläche und in einem Abstand davon erstreckt und eine Vertiefungsquerschnittsfläche von mindestens 10 mm² besitzt; und
- eine Lamelle (14), die die zwei Kanäle und die Vertiefung verbindet;
**dadurch gekennzeichnet, dass** das Laufflächenmerkmal ansonsten blind ist und die Reihe mindestens 50 ähnliche Laufflächenmerkmale umfasst.

2. Schwerlastwagenreifenlauffläche (1) nach Anspruch 1, wobei die zwei Kanäle (12) des Laufflächenmerkmals einen Abstand von mindestens gleich 4 mm voneinander haben.

3. Schwerlastwagenreifenlauffläche (1) nach einem der vorhergehenden Ansprüche, wobei die zwei Kanäle (12) eine Kanalquerschnittsfläche von mindestens gleich 12,6 mm² und höchstens gleich 78,6 mm² haben.

4. Schwerlastwagenreifenlauffläche (1) nach einem der vorhergehenden Ansprüche, wobei die Vertiefung (13) eine Vertiefungsquerschnittsfläche von mindestens gleich 12,6 mm² und höchstens gleich 78,6 mm² hat.

5. Schwerlastwagenreifenlauffläche (1) nach einem der vorhergehenden Ansprüche, wobei die Laufflächenmerkmale (11) der Reihe dergestalt sind, dass die zwei Kanäle (12) jedes Merkmals in Längsrichtung (L) der Lauffläche versetzt sind.

6. Schwerlastwagenreifenlauffläche (1) nach Anspruch 5, wobei die Laufflächenmerkmale (11) der Reihe dergestalt sind, dass die zwei Kanäle (12) jedes Merkmals in Querrichtung (W) der Lauffläche versetzt sind.

7. Schwerlastwagenreifenlauffläche (1) nach einem der vorhergehenden Ansprüche, wobei die Laufflächenmerkmale (11) der Reihe dergestalt sind, dass die Lamelle (14) jedes Merkmals gewellt ist.

8. Schwerlastwagenreifenlauffläche (1) nach einem der vorhergehenden Ansprüche, mit einer Vielzahl von Reihen der Laufflächenmerkmale über die Breitenrichtung der Lauffläche, wobei die Reihen parallel zueinander angeordnet sind.

9. Schwerlastwagenreifenlauffläche (1) nach Anspruch 8, mit mindestens vier Reihen der parallel zueinander angeordneten Laufflächenmerkmale.

10. Schwerlastwagenreifenlauffläche (1) nach Anspruch 8, mit mindestens sechs Reihen der parallel zueinander angeordneten Laufflächenmerkmale.

11. Schwerlastwagenreifenlauffläche (1) nach einem der vorhergehenden Ansprüche, mit weniger als drei offenen Längsrillen.

12. Schwerlastwagenreifenlauffläche nach Anspruch 11, mit weniger als zwei offenen Längsrillen.

13. Schwerlastwagenreifenlauffläche (1) nach Anspruch 11, die keine offene Längsrille umfasst.

14. Schwerlastwagenreifenlauffläche (1) nach einem der vorhergehenden Ansprüche, die funktionsfähig an einem Schwerlastwagenreifen befestigt ist.

15. Schwerlastwagenreifen (20) mit einer Schwerlastwagenreifenlauffläche nach einem der vorhergehenden Ansprüche.

## Revendications

1. Bande de roulement de pneu de camion lourd (1), ayant une direction longitudinale (L), une direction transversale (W) et une direction de l'épaisseur, ladite bande de roulement ayant une surface d'engagement au sol et comprenant une série de caractéristiques de bande de roulement (11) similaires, répétée le long de sa direction longitudinale, chacune desdites caractéristiques de bande de roulement de ladite série comprenant :
- deux conduits (12), s'étendant depuis la surface d'engagement au sol dans la direction de l'épaisseur, lesdits conduits étant à distance l'un de l'autre et ayant une superficie de section de conduit d'au moins 10 mm² et une longueur comprise entre 50 % et 100 % d'une épaisseur de ladite bande de roulement ;
- un vide (13), en connexion fluidique avec lesdits deux conduits, ledit vide s'étendant sensiblement parallèlement à la surface d'engagement au sol de la bande de roulement et à une distance de celle-ci et ayant une superficie de section de vide d'au moins 10 mm² et
- une lamelle (14), joignant lesdits deux conduits et ledit vide ;
**caractérisée en ce que**
ladite caractéristique de bande de roulement est par ailleurs aveugle et que ladite série comprend au moins 50 desdites caractéristiques de bande de roulement similaires.

2. Bande de roulement de pneu de camion lourd (1) selon la revendication 1, dans laquelle les deux conduits (12) de ladite caractéristique de bande de roulement sont éloignés d'une distance au moins égale à 4 mm.

3. Bande de roulement de pneu de camion lourd (1) selon l'une quelconque des revendications précédentes, dans laquelle les deux conduits (12) ont une superficie de section de conduit au moins égale à 12,6 mm² et au plus égale à 78,6 mm².

4. Bande de roulement de pneu de camion lourd (1) selon l'une quelconque des revendications précédentes, dans laquelle le vide (13) a une superficie de section de vide au moins égale à 12,6 mm² et au plus égale à 78,6 mm².

5. Bande de roulement de pneu de camion lourd (1) selon l'une quelconque des revendications précédentes, dans laquelle les caractéristiques de bande de roulement (11) de ladite série sont telles que les deux conduits (12) de chaque caractéristique sont décalés dans la direction longitudinale (L) de la bande de roulement.

6. Bande de roulement de pneu de camion lourd (1) selon la revendication 5, dans laquelle les caractéristiques de bande de roulement (11) de ladite série sont telles que les deux conduits (12) de ladite caractéristique sont décalés dans la direction transversale (W) de la bande de roulement.

7. Bande de roulement de pneu de camion lourd (1) selon l'une quelconque des revendications précédentes, dans laquelle les caractéristiques de bande de roulement (11) de ladite série sont telles que la lamelle (14) de chaque caractéristique est ondulée.

8. Bande de roulement de pneu de camion lourd (1) selon l'une quelconque des revendications précédentes, comprenant une pluralité desdites séries desdites caractéristiques de bande de roulement dans la direction de la largeur de la bande de roulement, lesdites séries étant agencées parallèlement l'une à l'autre.

9. Bande de roulement de pneu de camion lourd (1) selon la revendication 8, comprenant au moins quatre séries dites caractéristiques de bande de roulement, agencées parallèlement l'une par rapport à l'autre.

10. Bande de roulement de pneu de camion lourd (1) selon la revendication 8, comprenant au moins six séries desdites caractéristiques de bande de roulement, agencées parallèlement l'une par rapport à l'autre.

11. Bande de roulement de pneu de camion lourd (1) selon l'une quelconque des revendications précédentes, comprenant moins de trois rainures ouvertes longitudinales.

12. Bande de roulement de pneu de camion lourd (1) selon la revendication 11, comprenant moins de deux rainures ouvertes longitudinales.

13. Bande de roulement de pneu de camion lourd selon la revendication 11, ne comprenant pas de rainure ouverte longitudinale quelconque.

14. Bande de roulement de pneu de camion lourd (1) selon l'une quelconque des revendications précédentes, fixée de manière opérationnelle à un pneu de camion lourd.

15. Pneu de camion lourd (20), comprenant une bande de roulement de pneu de camion lourd selon l'une quelconque des revendications précédentes.
